# EUROPEAN PATENT SPECIFICATION

(11) **EP 2 797 737 B1**
(45) Date of publication and mention of the grant of the patent: **12.10.2016**
(21) Application number: 12824710.3
(22) Date of filing: 19.12.2012
(51) Int. Cl.: B29D 30/10, B29C 47/92, G01B 13/00

(54) **A PROCESS AND AN APPARATUS FOR BUILDING A TYRE**
VERFAHREN UND VORRICHTUNG ZUM AUFBAUEN EINES REIFENS
PROCÉDÉ ET APPAREIL POUR L'ASSEMBLAGE D'UN PNEUMATIQUE

(30) Priority: 29.12.2011 IT PD20110417; 18.01.2012 US 201261587980 P
(43) Date of publication of application: 05.11.2014
(73) Proprietor: Pirelli Tyre S.p.A., 20126 Milano (IT)
(72) Inventor: BALLABIO, Michele, I-20126 Milano (IT); LO PRESTI, Gaetano, I-20126 Milano (IT); BELFORTE, Guido, I-10129 Torino (IT); CARELLO, Massimiliana, I-10129 Torino (IT); COLOMBO, Federico, I-10129 Torino (IT); IVANOV, Alexandre, I-10129 Torino (IT)
(74) Representative: Susanetto, Carlo
(86) International application number: PCT/IB2012/057476
(87) International publication number: WO 2013/098724

(56) References cited:
- EP-A1- 2 036 696
- WO-A1-2004/022322
- JP-A- 2002 248 672
- US-A- 3 482 954
- US-A- 3 547 891
- US-A- 3 601 138
- US-A- 4 515 738
- US-A- 5 207 416

## Description

The present invention relates to a process for building a tyre and apparatuses provided for operating in accordance with that process.

A tyre generally comprises a carcass structure which is formed toroidally about an axis of rotation and which comprises at least one carcass ply which has end strips which engage in respective annular anchoring structures, each of them normally formed by at least one annular insert which is substantially circumferential and to which there is applied at least one filling insert which tapers radially away from the axis of rotation.

In a radially external position with respect to the carcass structure there is provided a belt structure which comprises one or more belt layers which are arranged in a radially superimposed manner with respect to each other and with respect to the carcass ply, having reinforcing cords of textile material or metal with an intersecting orientation and/or substantially parallel with the direction of circumferential development of the tyre.

In a radially external position with respect to the belt structure there is applied a tread band which is constructed from elastomer material, similarly to other semi-processed constituents of the tyre.

There may be interposed between the tread band and the belt structure a so-called "substrate" which also comprises elastomer material having suitable properties so as to ensure a stable union of the tread band itself.

Sidewalls of elastomer material are further applied to the lateral surfaces of the carcass structure, each extending from one of the lateral edges of the tread band as far as a location at the annular anchoring structure with respect to the beads.

In tyres of the "tubeless" type, the carcass ply is internally coated with a layer of elastomer material which is preferably based on butyl and which is generally referred to as a "liner" having optimum impermeability characteristics with respect to air and extending from one bead to the other.

In tyres of the self-supporting type or for other specific uses, the carcass structure may further be provided with auxiliary support inserts of elastomer material which are arranged in an axially internal position with respect to each of the sidewalls. Those auxiliary support inserts which are generally referred to as "sidewall inserts" are suitable for supporting the loads transmitted to the wheel in the event of accidental deflation of the tyre, in order to allow the vehicle to continue to travel in safe conditions.

The term "elastomer material" is intended to refer to a composition comprising at least one elastomer polymer and at least one reinforcing filler. That composition preferably further comprises additives such as, for example, a reticulating and/or plasticizing agent. Owing to the presence of the reticulating agent, the elastomer polymer may be reticulated by means of heating so as to form the final manufactured product.

The term "component of elastomer material" of the tyre is intended to refer to any member of only elastomer material of the tyre (for example, tread band, sidewalls, liners, sub-liners, fillers in the bead zone, inserts of the sidewalls in self-supporting tyres, anti-abrasive inserts, reinforcement inserts, substrate of the belt structure, substrate of the tread band, etc.), or a portion thereof, or the assembly formed by two or more of the above-mentioned members or portions thereof.

The term "component of a tyre" is intended to refer to any functional component of the tyre (for example, tread band, sidewalls, liners, subliners, fillers in the bead zone, inserts of the sidewalls in self-supporting tyres, anti-abrasive inserts, reinforcement inserts, substrate of the belt structure, substrate of the tread band, carcass ply(s), belt strip(s), reinforcements armoured with cords of textile material or metal, etc.) or a portion thereof, or the assembly formed by two or more of the above-mentioned components or portions thereof.

The term "elongate element" is intended to refer to an element of elastomer material having a predominant extent in a longitudinal direction thereof.

The directions "upwards" and "downwards" or the terms "upper" and "lower" when associated with elements of an apparatus are intended to refer to an apparatus which is mounted and installed in the normal operating configuration thereof.

The conventional processes for building a tyre make provision for a component of elastomer material to be constructed by applying a continuous elongate element to the radially external surface of a forming drum.

In greater detail, that process makes provision for the continuous elongate element to be supplied continuously by a dispensing member, typically an extruder, and for the forming drum to be advantageously caused to rotate about its own axis of rotation in such a manner that the continuous elongate element output from the dispensing member may be uniformly distributed over the radially external surface of the forming drum itself.

The rate of rotation of the forming drum and the extrusion rate of the continuous elongate element are advantageously coordinated with each other so as not to bring about accumulations of material or, conversely, splits in the continuous elongate element.

WO2004/022322 in the name of the same Applicant discloses a process for building a tyre in which the output of the continuous elongate element from the extruder is generally detected by an optical device.

US4515738 discloses a process for building a tyre in which the thickness of a composite elongate element formed by various co-extruded sub-strips, each having a different composition of elastomer material, is monitored continuously in order to determine the correct amount of the quantity of extruded elastomer material both of the elongate element in total and of each individual sub-strip. The monitoring of the thickness of the elongate element is carried out by means of a plurality of pairs of pneumatic sensors, each pair being formed by sensors which are arranged in a mutually facing position in the direction defined by the thickness to be measured. Furthermore, those pairs of pneumatic sensors are necessarily positioned at such a distance from the extruder head as to allow the thickness of the elongate element of elastomer material to be detected at the end of the expansion step of the elastomer material output from the opening of the extruder.

The Applicant, in the context of those processes, has perceived the need for precisely establishing the exact time of the output of the continuous elongate element from the opening formed in the extruder head so that, by taking into due consideration the rate of extrusion of the elongate element (a value which is known per se because it can be derived directly from a process parameter of the extruder) and the known distance of the extruder from the forming drum, it is possible to start the rotation of the forming drum at the most correct time.

The Applicant verified beforehand that the provision of an optical device as taught in WO2004/022322 is found to be a solution which is not very practicable in a real industrial process for building tyres. In fact, this type of sensor has been found to be poorly reliable because it is excessively sensitive to other elements of the building process and mainly with respect to problems involving cleanliness owing to the presence of fumes and dust which are also produced at least partially by the same process for extrusion of the continuous elongate element.

The Applicant has further observed that the free space around the head of the extruder is particularly limited. These types of apparatus may be provided with a mechanical cleaning device which, at the end of the extrusion step, moves towards the head in order to clean and remove from the head any material residues, or which may be provided with an auxiliary nozzle which is arranged lower than the head of the extruder and which is orientated so as to supply a jet of air capable of lifting the initial end of the continuous elongate element output from the opening of the extruder so as to direct it more readily towards the forming drum.

However, the Applicant has observed that the substantial dimensions of an optical device and the need for provision, in mutual alignment and at opposite sides to the opening from which the continuous elongate element is output, of a transmitter of the optical signal and a receiver of the optical signal, make the positioning thereof in the region of the head of the extruder particularly complicated.

Therefore, the Applicant has perceived that it is necessary, in order to detect precisely the time of output of a continuous elongate element, to construct the process in a functionally different manner by using different detection devices having smaller dimensions and, at the same time, capable of being able to operate efficiently and reliably in the region of the head of the extruder without suffering, over time, from the operating and ambient conditions which are typical of those processes, characterized by the presence of fumes and dust as well as auxiliary mechanical devices which operate in the region of the head of the extruder.

Finally, the Applicant has found that the presence of the continuous elongate element being output from the head of an extruder may be detected in an effective and reliable manner by providing, in the region of said head, a first nozzle and second nozzle of a pneumatic sensor, which are the supplier and receiver, respectively, and in which the first nozzle is capable of supplying a flow of fluid orientated towards the opening from which the continuous elongate element is extruded. The second nozzle is connected to a pressure detector and is arranged in such a position as not to interfere with the trajectory of the flow of fluid discharged from the first nozzle in the absence of the continuous elongate element but, at the same time, to be on the trajectory of the fluid flow once it has been deviated by the presence thereof.

In particular, in a first aspect thereof, the invention relates to a process for building a tyre according to claim 1.

The Applicant considers that operating in accordance with a process having such features brings about optimum synchronicity between the start of the rotation of the forming drum and the arrival of the continuous elongate element output from the head of the extruder, and in particular the efficiency and precision of that operation is maintained in a reliable manner over time without any need for continuous revisions and maintenance operations and without any need for subsequently modifying the configuration of the existing apparatuses. Furthermore, this is all achieved without involving particularly onerous economic investment.

In a second aspect, the invention relates to an apparatus for building a tyre according to claim 3.

The Applicant considers that an apparatus having those features allows measurements to be obtained for detecting the output of the continuous elongate element from the head of the extruder which are precise and reliable overtime. Furthermore, owing to particularly small dimensions, the nozzles of the pneumatic sensor can also abut the head in a position near the opening of the extruder in such a manner that the fluid flow travels substantially in an adhesive manner over the surface of the head, but without interfering in any way with the correct functionality of the extruder or the auxiliary devices thereof.

Finally, in a third aspect thereof, the invention relates to an apparatus for building a tyre according to claim 8.

The Applicant considers that an apparatus having those features, in addition to providing measurements for detecting the output of the continuous elongate element from the head of the extruder which are precise and reliable over time, keeps the inlet of the second nozzle, which is connected to the pressure measurement unit, isolated and protected from any external flows of fluid which may potentially interfere with the measurement to be taken.

Furthermore, with respect to the apparatus to which the preceding aspect of the invention relates, this second apparatus has a more compact configuration and is easier to assemble on the head of the extruder.

The present invention, in at least one of the above-mentioned aspects, may have at least one of the preferred features set out below.

According to a preferred embodiment, before the start of said extrusion, there is supplied from an auxiliary nozzle a fluid jet directed in an upward direction and away from said head in order to lift said continuous elongate element output from said opening.

Owing to this feature, the continuous elongate element may be correctly directed, at the start of extrusion, towards the radially external surface of the forming drum.

Preferably, said forming drum is caused to rotate within a time which is less than or equal to about 7 seconds.

Preferably, said forming drum is caused to rotate within a time between about 0 seconds and about 7 seconds from the detection of said variation in pressure.

There is thereby achieved a correct synchronicity between the rate of the continuous elongate element arriving at the external surface of the forming drum and the peripheral rate thereof. The delay time of actuation of the forming drum is also connected with the distance thereof from the head of the extruder and the rate of extrusion of the elastomer strip.

In a preferred embodiment, said first nozzle is provided so as to direct said fluid flow in a flow direction which is inclined with respect to said longitudinal direction through an angle which is greater than or equal to about 2°.

In a preferred embodiment, said first nozzle is provided so as to direct said fluid flow in a flow direction which is inclined with respect to said longitudinal direction through an angle which is less than or equal to about 30°.

In a preferred embodiment, said first nozzle is provided so as to direct said fluid flow in a flow direction which is inclined with respect to said longitudinal direction through an angle between about 2° and about 30°.

In that manner, the continuous elongate element is actually used as a guide element for the fluid flow supplied by the first nozzle. In fact, when the fluid flow comes into contact with the continuous elongate element output from the opening of the extruder, it remains substantially in contact with the surface thereof parallel with the longitudinal direction of the opening of the extruder, and when it becomes detached therefrom, it maintains that direction ending directly at the inlet of the second nozzle positioned laterally relative to the opening, thereby minimizing the dispersion of the fluid flow and consequently improving the sensitivity of the detection of the variation in pressure.

Preferably, said second nozzle is spaced apart from said flow direction by a distance between about 0.4 mm and about 3 mm.

Preferably, said second nozzle is spaced apart from said flow direction by a distance greater than or equal to about 0.4 mm.

Preferably, said second nozzle is spaced apart from said flow direction by a distance which is less than or equal to about 3 mm.

Preferably, the diameter of the first nozzle and second nozzle has a value greater than or equal to about 0.5 mm.

Preferably, the diameter of the first nozzle and second nozzle has a value less than or equal to about 1.5 mm.

The diameter of the first nozzle and second nozzle has a value of between about 0.5 mm and about 1.5 mm.

In that manner, the fluid flow supplied by the first nozzle is prevented from being introduced into the second nozzle in the absence of the continuous elongate element.

According to a preferred feature, said second nozzle is spaced apart from said opening by a distance greater than or equal to about 2.5 mm.

According to a preferred feature, said second nozzle is spaced apart from said opening by a distance less than or equal to about 6.5 mm.

According to a preferred feature, said second nozzle is spaced apart from said opening by a distance between about 2.5 mm and about 6.5 mm.

According to another preferred feature, said first nozzle is spaced apart from said opening by a distance greater than or equal to about 1 mm.

According to another preferred feature, said first nozzle is spaced apart from said opening by a distance less than or equal to about 2 mm.

According to another preferred feature, said first nozzle is spaced apart from said opening by a distance between about 1 mm and about 2 mm.

Those features optimize the position of the two nozzles of the pneumatic sensor so that they are as near the opening of the extruder as possible and consequently the continuous elongate element output therefrom but without risking becoming affected by the material itself.

In an alternative embodiment, said first nozzle has a C-like discharge cross-section which is open towards a wall of said head, said second nozzle being positioned between said head and said first nozzle.

There is thereby obtained a configuration which particularly protects the second nozzle of the pneumatic sensor.

In another alternative embodiment, said first nozzle and said second nozzle are spaced apart from said opening by a distance which is greater than or equal to about 2 mm.

In another alternative embodiment, said first nozzle and said second nozzle are spaced apart from said opening by a distance which is less than or equal to about 4 mm.

In another alternative embodiment, said first nozzle and said second nozzle are spaced apart from said opening by a distance which is between about 2 mm and about 4 mm.

According to a preferred feature, said pneumatic sensor is positioned leaning against said head.

Preferably, said first nozzle and said second nozzle are spaced apart therefrom by a distance which is less than about 10 mm.

More preferably, said first nozzle and said second nozzle are spaced apart from said head by a distance less than about 5 mm.

In an even more preferred manner, said first nozzle and said second nozzle are spaced apart from said head by a distance of about 3 mm.

In this manner, the first nozzle and second nozzle adjoin the head of the extruder to the greatest possible extent in such a manner that the fluid flow is redirected by the continuous elongate element as soon as it leaves the opening of the extruder.

In a preferred embodiment, said first nozzle and said second nozzle are arranged in a position protected from fluid flows discharged from auxiliary nozzles of said extruder.

Preferably, in a position below said opening, there is provided an auxiliary nozzle which is provided to lift said continuous elongate element with a fluid jet when it is output from said opening, said pneumatic sensor being positioned on said head at the opposite side with respect to said auxiliary nozzle.

Preferably, said pneumatic sensor is not affected by said fluid jet which is discharged from said auxiliary nozzle, both in the presence and in the absence of said continuous elongate element output from said opening.

Even more preferably, said auxiliary nozzle is positioned on said head in the region of a lower wall of said head and said fluid jet which is discharged from said auxiliary nozzle is directed in a direction which is inclined upwards, away from said head.

Owing to these features, the pneumatic sensor remains in a protected position with respect to the lifting fluid jet which may therefore be used without any negative repercussions on the detection of the presence of the continuous elongate element output from the opening of the extruder.

In a preferred form of the invention, there is defined on said head a front wall, at which said opening is open, and an upper wall and an opposite lower wall, said pneumatic sensor comprising a first reference surface which adjoins said upper wall and a second reference surface which adjoins said front wall.

In a preferred form of the invention, said pneumatic sensor comprises a third reference surface which adjoins a lateral wall of said head which extends between said upper wall and said lower wall.

In that manner, it is possible to mount the pneumatic sensor on the head of the extruder in a rapid, simple and precise manner.

The features and advantages of the invention will be better appreciated from the detailed description of some preferred embodiments thereof which are illustrated purely by way of non-limiting example with reference to the appended drawings, in which:
- Figure 1 is a schematic view of a first embodiment of an apparatus for building a tyre, provided for operating in accordance with the process of the present invention;
- Figures 2 and 3 are perspective views, drawn to an enlarged scale, of a detail of the apparatus of Figure 1 from one side and the other, respectively;
- Figures 4 to 6 are a front view, a side elevation and a plan view of the detail of Figure 2, respectively;
- Figure 7 shows an example of a graph setting out the variation in pressure detected in a period of time comprising the output of a continuous elongate element from an extruder of the apparatus of Figure 1;
- Figure 8 is a side view from above of a detail of a second embodiment of an apparatus for building a tyre which is provided to operate in accordance with the process of the present invention;
- Figure 9 is a plan view from below of the detail of Figure 8.

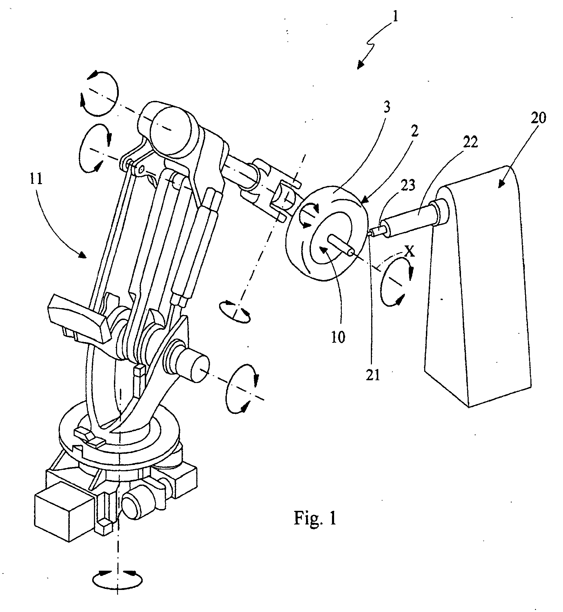

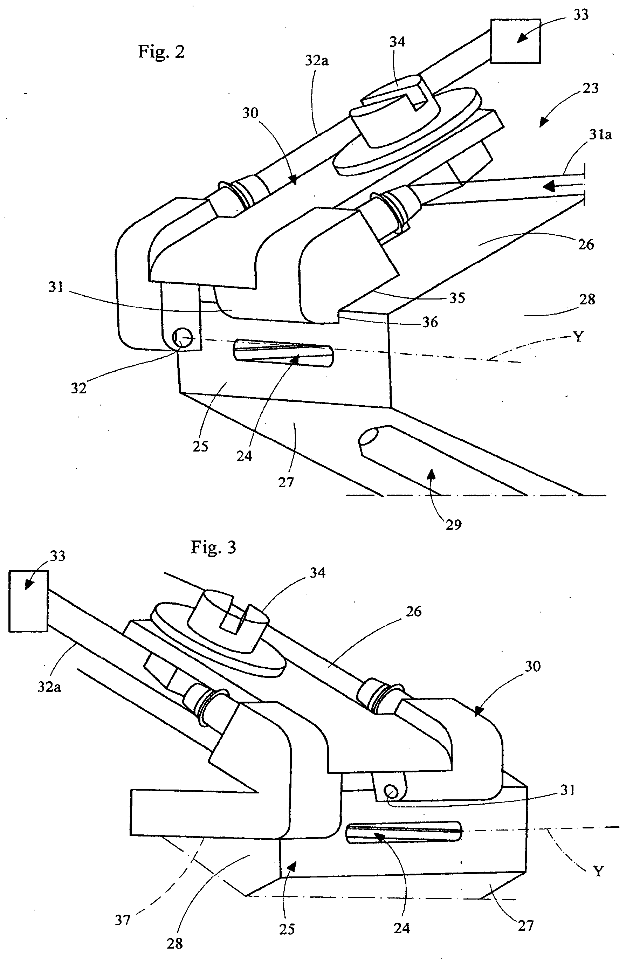

With initial reference to Figures 1 to 7, there is generally designated 1 a first example of an apparatus for building a tyre which is provided to operate in accordance with the process of the present invention.

The apparatus 1 is preferably configured in order to construct on a forming drum 2 for a tyre a component of elastomer material, in particular a tread band of the tyre.

The forming drum 2 is known per se and has a substantially toroidal or cylindrical formation, on which there is defined a radially external surface 3.

The forming drum 2 is connected to a control device, for example, a robot arm 11, so as to move it and cause it to rotate about its own axis of rotation X. Preferably, the axis of rotation X substantially coincides with a main axis, the axis of longitudinal symmetry.

The forming drum 2 is provided to support a tyre being formed in such a manner that the tyre has the radially external surface thereof directed towards the outer side and the axis of the tyre being formed coincides with the axis of rotation X of the forming drum 2.

It will be appreciated that said radially external surface 3 may also comprise the radially external surface of at least one other optional component of the tyre radially superimposed on said forming drum.

The apparatus 1 further comprises an extruder 20 which is operatively associated with the forming drum 2 and which is provided to supply a continuous elongate element 21, which is distributed over the radially external surface 3 whilst the forming drum 2 rotates about its own axis of rotation X.

The extruder 20 may be of any type suitable for the object and known in the field, and comprises a body 22, in which there are received the members which are capable of moving and heating the elastomer admixture, and a head 23 from which the continuous elongate element 21 is supplied.

In particular, the continuous elongate element 21 is supplied via an opening 24 which is formed in the head 23 and configured with a slot which extends in a prevailing longitudinal direction Y.

There is defined on the head 23 a front wall 25, in which the opening 24 opens, an upper wall 26 and an opposing lower wall 27, which is closed by opposing lateral walls 28. Preferably, the upper wall 26 and the lower wall 27 are symmetrically inclined with respect to the front wall 25, conferring on the head 23 a tapered profile in the direction towards the front wall 25.

Examples of suitable extruders are disclosed, for example, in WO2004/022322 or in WO2005/000559 in the name of the same Applicant.

The apparatus 1 further comprises a control device which is not illustrated in detail in the appended Figures and which is provided so as to rotate the forming drum 2 in accordance with the presence of the continuous elongate element 21 output from the opening 24.

In the region of the lower wall 27, therefore in a position under the opening 24, there is provided an auxiliary nozzle 29 which is provided to lift the continuous elongate element 21 with a fluid jet, for example, air, when it is output from the opening 24.

The auxiliary nozzle 29 is orientated in such a manner that the lifting air jet is orientated in a trajectory Z which is inclined and directed in an upward direction, away from the front wall 25.

The presence of the continuous elongate element 21 output from the opening 24 is detected owing to a pneumatic sensor 30 which is mounted on the head 23 in the region of the opening 24.

The pneumatic sensor 30 comprises a first nozzle 31 which is connected to a supply of fluid, for example, air, via a pipe 31a, from which a fluid flow is discharged (for example, air) in a flow direction A, as well as a second nozzle 32 which is spaced apart from the flow direction A and which is connected to a pressure measurement unit which is generally designated 33 via a pipe 32a.

The diameter of the first and second nozzles 31, 32 has a value between about 0.5 mm and about 1.5 mm, respectively.

The pneumatic sensor 30 is mounted on the head 23 at the side opposite the auxiliary nozzle 29 so as not to be affected by the air jet emitted thereby both in the presence and in the absence of the continuous elongate element 21 output from the opening 24.

In particular, the pneumatic sensor is positioned on the head 23 in such a manner that the first and second nozzles 31, 32 are spaced apart from the front wall 25 by a distance less than about 10 mm, preferably by a distance less than about 5 mm, and in an even more preferred manner by a distance of about 3 mm.

The pneumatic sensor 30 is fixed to the head 23 by means of a screw 34 and the correct positioning thereof is promoted by the provision on the pneumatic sensor 30 of a first reference surface 35 which is capable of abutting the upper wall 26, a second reference surface 36 which is contiguous and inclined with respect to the first reference surface 35 and which is capable of abutting the front wall 25, and a third reference surface 37 which is capable of abutting one of the lateral walls 28.

In particular, the first nozzle 31 is provided in a position above the opening 24 at a distance from the opening 24 of between about 1 mm and about 2 mm.

Furthermore, the first nozzle 31 is open towards the opening 24 and is orientated in such a manner that the flow direction A is directed in a downward direction with an inclination with respect to the longitudinal direction Y which is defined by the opening 24 defined by an angle H between about 2° and about 30°, preferably of about 20°.

The second nozzle 32 is open towards the opening 24 and is positioned laterally with respect thereto, substantially in alignment with the longitudinal direction Y, at a distance from the opening 24 between about 2.5 mm and about 6.5 mm, preferably of about 3.5 mm.

Furthermore, the second nozzle 32 is spaced apart from the flow direction A defined by the air flow discharged by the first nozzle 31 by a distance between about 0.4 mm and about 3 mm.

The apparatus 1 further comprises a mechanical cleaning device, comprising a movable member which can be moved towards and away from the head 23 in order to clean any residues of elastomer material at the end of the step for supplying the continuous elongate element 21.

The apparatus 1 operates in accordance with the methods described below.

The forming drum 2 is moved towards the extruder 20.

The pneumatic sensor 30 is actuated by supplying air to the first nozzle 31 through the pipe 31a. The air discharged from the first nozzle 31 follows the trajectory defined by the direction of flow A and does not become introduced into the second nozzle 32 because it is positioned with spacing from the direction of flow A.

The auxiliary nozzle 29 is actuated similarly, but even the air jet thereof directed in the trajectory Z is not introduced into the second nozzle 32 owing to the protected position thereof adjoining the front wall 25 whilst the trajectory Z is directed away therefrom.

As a result, the pressure measurement unit 33 connected to the second nozzle 32 detects a base pressure value P.

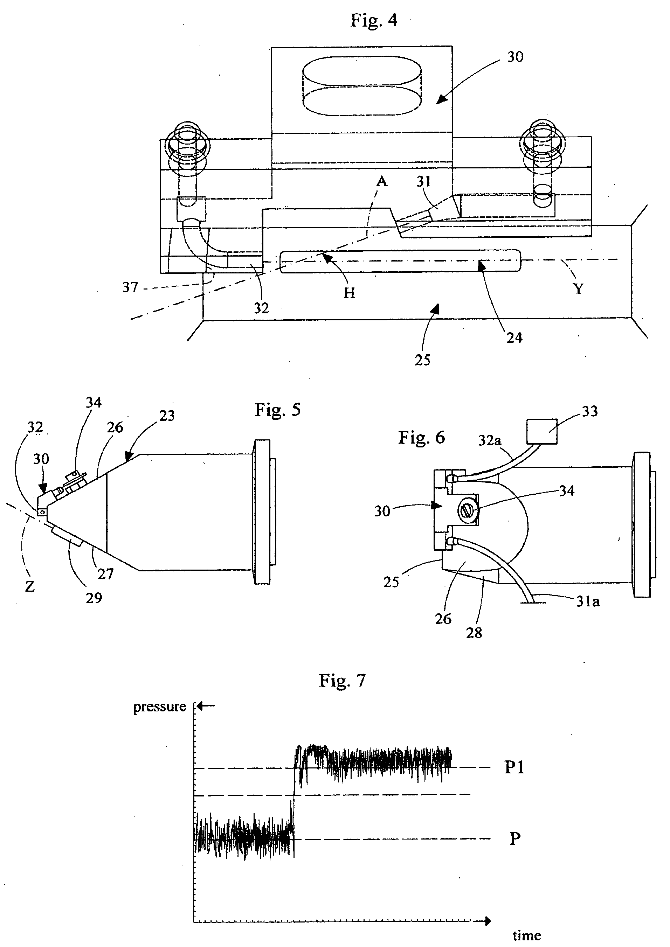

The extruder 20 is then actuated so as to begin to supply a continuous elongate element 21 through the opening 24. As soon as the continuous elongate element 21 leaves the opening 24, the air flow emitted from the first nozzle 31 is redirected by the continuous elongate element, moving away from the original flow direction A in order to follow the longitudinal direction Y and to finish directly inside the second nozzle 32. The introduction of the air flow into the second nozzle 32 involves a sudden increase in pressure therein, instantaneously detected by the pressure measurement unit 33 with a value P1 greater than P, as illustrated by the graph of Figure 7.

The control device of the apparatus 1 detects the pressure increase signal, associating it with the presence of the continuous elongate element 21 output from the opening 24 and, after a predefined time from the detection of the pressure increase inside the second nozzle 32, brings about rotation of the forming drum 2 about the axis of rotation X.

Preferably, the forming drum 2 is caused to rotate within a time between about 0 seconds and about 7 seconds from the detection of that pressure variation.

The free end of the continuous elongate element 21 output from the opening 24 is lifted by the air jet discharged by the auxiliary nozzle 29 until it moves into contact with the radially external surface 3 of the forming drum 2 which is rotating about the axis of rotation X.

The continuous elongate element 21 is therefore distributed uniformly over the radially external surface 3 by means of a spiral deposit which is coordinated by predefined axial movements of the forming drum 2 in accordance with methods known per se.

At the end of the step for supplying the continuous elongate element 21, the extruder 20 is stopped and the mechanical cleaning device is actuated in order to remove any residues of elastomer material from the head 23.

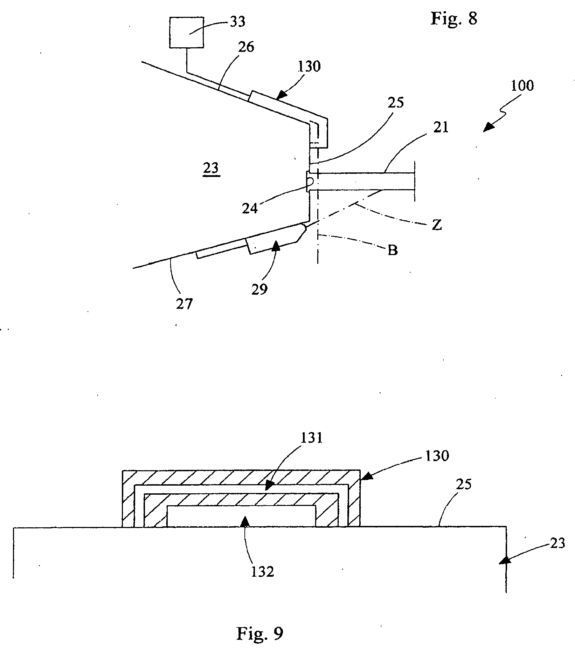

In Figures 8 and 9, there is generally designated 100 a second embodiment of an apparatus operating in accordance with the process of the invention, wherein details similar to those of the preceding embodiment are indicated with the same reference numerals.

The apparatus 100 differs from the apparatus 1 described above owing to the provision of a pneumatic sensor 130 which is differently configured with respect to the pneumatic sensor 30.

The pneumatic sensor 130 is fixed to the upper wall 26 with additional abutment against the front wall 25 and comprises a first nozzle 131, from which an air flow is discharged in a flow direction B which is substantially perpendicular to the longitudinal direction Y of the opening 24, and a second nozzle 132 which is positioned between the front wall 25 of the head 23 and the first nozzle 131.

The first nozzle 131 which is connected to a source of air advantageously has a discharge cross-section C which is open in the direction towards the front wall 25 of the head 23 so as to bring about an air flow which substantially surrounds the second nozzle 132, enclosing it between the air flow and the front wall 25.

In that case, the first and second nozzles 131, 132 are both positioned at the vertical in respect of the opening 24 and are both open in a downward direction so that, when the continuous elongate element 21 is output from the opening 24, the air flow discharged from the first nozzle 131 is stopped thereby and directed upwards again in the direction of the second nozzle 132.

In that manner, the pressure inside the second nozzle 132 increases and is immediately detected by the pressure measurement unit 33 connected thereto, in such a manner that the device for controlling the apparatus 100 is capable of establishing in a precise manner the start of the rotation of the forming drum 2.

In detail, the first and second nozzles are spaced apart from the opening 24 by a distance between about 2 mm and about 4 mm, whilst the second nozzle 132 is spaced apart from the fluid flow discharged by the first nozzle 131 by a distance between about 0.3 mm and about 0.5 mm.

Naturally, a person skilled in the art could apply to the above-described invention additional modifications and variants for the purpose of complying with specific and contingent application requirements, which variants and modifications are included within the scope of protection as defined by the appended claims.

## Claims

1. A process for building a tyre comprising:
- supplying a fluid flow through a first nozzle (31; 131) of a pneumatic sensor (30; 130) which is provided in the region of a head (23) of an extruder (20), said fluid flow being directed in a flow direction (A; B) which does not interfere with a second nozzle (32; 132) of said pneumatic sensor which is connected to a pressure measuring unit (33),
supplying from an auxiliary nozzle (29) a fluid jet directed in an upward direction and away from said head (23) in order to lift a continuous elongate element (21) output from an opening (24) which is formed in said head (23) of said extruder, wherein said sensor is positioned on said head (23) at the opposite side with respect to said auxiliary nozzle (29), so as not to be affected by said fluid jet which is discharged from said auxiliary nozzle, both in the presence and in the absence of said continuous elongate element output from said opening (24),
- starting to extrude said continuous elongate element (21) through said opening (24),
- redirecting said fluid flow via said continuous elongate element (21) into said second nozzle (32; 132) of said pneumatic sensor,
- detecting a variation in pressure in said second nozzle (32; 132), thereby determining the presence of said continuous elongate element (21) output from said opening,
- after a predetermined time from said detection of the variation in pressure, causing a forming drum (2) to rotate about its own axis of rotation (X),
- distributing said continuous elongate element (21) over a radially external surface (3) of said forming drum (2).

2. A process according to claim 1, wherein said forming drum (2) is caused to rotate within a time between about 0 seconds and about 7 seconds from the detection of said variation in pressure.

3. An apparatus (1) for building a tyre comprising:
- an extruder (20) which is provided to supply a continuous elongate element (21) through an opening (24) which extends in a prevailing longitudinal direction (Y) and which is formed in a head (23) of said extruder,
- an auxiliary nozzle (29) positioned below said opening (24) in the region of a lower wall (27) of said head and provided to lift said continuous elongate element (21) with a fluid jet directed in a direction (Z) which is inclined upwards, away from said head when said continuous elongate element is discharged from said opening,
- a forming drum (2) which is capable of rotating about its own axis of rotation (X), said forming drum being associated with said extruder in order to receive, in a rotating condition, said continuous elongate element output from said opening (24) at a radially external surface (3) of said forming drum,
- a control device (11) which is provided to cause said forming drum (2) to rotate in accordance with the presence of said continuous elongate element (21) output from said opening (24) and
- a pneumatic sensor (30) which is provided in the region of said opening (24) in order to detect the presence of said continuous elongate element (21) output from said opening,
- said sensor being positioned on said head (23) at the opposite side with respect to said auxiliary nozzle (29), so as not to be affected by said fluid jet which is discharged from said auxiliary nozzle, both in the presence and in the absence of said continuous elongate element output from said opening (24), and
- said sensor including a first nozzle (31) from which there is blown a fluid flow in a flow direction (A) and a second nozzle (32) which is spaced apart from said flow direction and which is connected to a pressure measuring unit (33) and towards which said fluid flow is redirected in the presence of said continuous elongate element (21) output from said opening, wherein said second nozzle (32) is provided laterally with respect to said opening (24) substantially in alignment with said longitudinal direction (Y).

4. An apparatus according to claim 3, wherein said first nozzle is provided so as to direct said fluid flow in a flow direction (A) which is inclined with respect to said longitudinal direction (Y) through an angle (H) between about 2° and about 30°.

5. An apparatus according to claim 3 or 4, wherein said second nozzle (32) is spaced apart from said flow direction (A) by a distance between about 0.4 mm and about 3 mm.

6. An apparatus according to any one of claims 3 to 5, wherein said second nozzle (32) is spaced apart from said opening (24) by a distance between about 2.5 mm and about 6.5 mm.

7. An apparatus according to any one of claims 3 to 6, wherein said first nozzle (31) is spaced apart from said opening (24) by a distance between about 1 mm and about 2 mm.

8. An apparatus (100) for producing a component of a tyre comprising:
- an extruder (20) which is provided to supply a continuous elongate element (21) through an opening (24) which extends in a prevailing longitudinal direction (Y) and which is formed in a head (23) of said extruder,
- an auxiliary nozzle (29) positioned below said opening (24) in the region of a lower wall (27) of said head and provided to lift said continuous elongate element (21) with a fluid jet directed in a direction (Z) which is inclined upwards, away from said head when said continuous elongate element is discharged from said opening,
- a forming drum (2) which is capable of rotating about its own axis of rotation (X), said forming drum being associated with said extruder in order to receive, in a rotating condition, said continuous elongate element (21) output from said opening at a radially external surface (3) of said forming drum,
- a control device (11) which is provided to cause said forming drum (2) to rotate in accordance with the presence of said continuous elongate element output from said opening and
- a pneumatic sensor (130) which is provided in the region of said opening in order to detect the presence of said continuous elongate element (21) output from said opening,
- said sensor being positioned on said head (23) at the opposite side with respect to said auxiliary nozzle (29), so as not to be affected by said fluid jet which is discharged from said auxiliary nozzle, both in the presence and in the absence of said continuous elongate element output from said opening (24), and
- said sensor including a first nozzle (131) from which there is blown a fluid flow in a flow direction (B) which is substantially perpendicular to said longitudinal direction (Y) of said opening and a second nozzle (132) which is spaced apart from said flow direction and which is connected to a pressure measuring unit (33) and towards which said fluid flow is redirected in the presence of said continuous elongate element output from said opening, wherein said first nozzle (131) has a discharge cross-section so as to determine a fluid flow which surrounds said second nozzle (132), enclosing said second nozzle between said fluid flow and said head.

9. An apparatus according to claim 8, wherein said first nozzle (131) has a C-like discharge cross-section which is open towards a front wall (25) of said head, said second nozzle (132) being positioned between said head (23) and said first nozzle (131).

10. An apparatus according to either claim 8 or 9, wherein said first nozzle (131) and said second nozzle (132) are spaced apart from said opening (24) by a distance between about 2 mm and about 4 mm.

11. An apparatus (1; 100) according to any one of claims 3 to 10, wherein said pneumatic sensor (30; 130) is positioned leaning against said head (23) so that said first nozzle (31; 131) and said second nozzle (32; 132) are spaced apart therefrom by a distance less than about 10 mm.

12. An apparatus (1; 100) according to any one of claims 3 to 10, wherein said first nozzle (31; 131) and said second nozzle (32; 132) are spaced apart from said head (23) by a distance less than about 5 mm.

13. An apparatus (1; 100) according to any one of claims 3 to 10, wherein said first nozzle (31; 131) and said second nozzle (32; 132) are spaced apart from said head (23) by a distance of about 3 mm.

14. An apparatus according to any one of claims 3 to 13, wherein there is defined on said head a front wall (25), at which said opening (24) is open, and an upper wall (26) and an opposite lower wall (27), said pneumatic sensor comprising a first reference surface (35) which adjoins said upper wall and a second reference surface (36) which adjoins said front wall.

15. An apparatus according to claim 14, wherein said pneumatic sensor comprises a third reference surface (37) which adjoins a lateral wall (28) of said head (23) which extends between said upper wall and said lower wall.

## Patentansprüche

1. Verfahren zur Herstellung eines Reifens, das die folgenden Schritte umfasst:
- Zuführen einer Fluidströmung durch eine erste Düse (31; 131) eines Pneumatiksensors (30; 130), der im Bereich eines Kopfes (23) eines Extruders (20) vorgesehen ist, wobei die Fluidströmung in eine Strömungsrichtung (A; B) gerichtet ist, die nicht mit einer zweiten Düse (32; 132) des Pneumatiksensors interferiert, die mit einer Druckmesseinheit (33) verbunden ist,
- Zuführen eines Fluidstrahls aus einer Zusatzdüse (29), der in einer Aufwärtsrichtung und von dem Kopf (23) weg gerichtet ist, um ein durchgehendes längliches Element (21) anzuheben, das aus einer Öffnung (24) ausgegeben wird, die in dem Kopf (23) des Extruders ausgebildet ist, wobei der Sensor auf dem Kopf (23) an der in Bezug auf die Zusatzdüse (29) gegenüberliegenden Seite positioniert ist, so dass er nicht durch den Fluidstrahl beeinträchtigt wird, der von der Zusatzdüse ausgegeben wird, weder in Anwesenheit noch in Abwesenheit des durchgehenden länglichen Elements, das aus der Öffnung (24) ausgegeben wird,
- Beginnen der Extrusion des durchgehenden länglichen Elements (21) durch die Öffnung (24),
- Umlenken der Fluidströmung über das durchgehende längliche Element (21) in die zweite Düse (32; 132) des Pneumatiksensors,
- Erfassen einer Schwankung in dem Druck in der zweiten Düse (32; 132), wodurch die Anwesenheit des durchgehenden länglichen Elements (21) bestimmt wird, das aus der Öffnung ausgegeben wird,
- Veranlassen der Drehung einer Formungstrommel (2) um ihre eigene Drehachse (X) nach einer vorbestimmten Zeit nach der Bestimmung der Druckschwankung,,
- Verteilen des durchgehenden länglichen Elements (21) über eine radial äußere Oberfläche (3) der Formungstrommel (2).

2. Verfahren nach Anspruch 1, wobei die Formungstrommel (2) veranlasst wird, sich über eine Zeit zwischen etwa 0 Sekunden und etwa 7 Sekunden ab der Erfassung der Druckschwankung zu drehen.

3. Vorrichtung zur Herstellung eines Reifens, die Folgendes umfasst:
- einen Extruder (20), der vorgesehen ist, um ein durchgehendes längliches Element (21) durch eine Öffnung (24) zuzuführen, die sich in einer vorherrschenden Längsrichtung (Y) erstreckt und die in einem Kopf (23) des Extruders ausgebildet ist,
- eine Zusatzdüse (29), die unter der Öffnung (24) in dem Bereich einer unteren Wand (27) des Kopfes positioniert und vorgesehen ist, um das durchgehende längliche Element (21) mit einem Fluidstrahl anzuheben, der in einer Richtung (Z), die nach oben geneigt ist, von dem Kopf weg gerichtet ist, wenn das durchgehende längliche Element aus der Öffnung ausgegeben wird,
- eine Formungstrommel (2), die in der Lage ist, sich um ihre eigene Drehachse (X) zu drehen, wobei die Formungstrommel dem Extruder zugeordnet ist, um in einem drehenden Zustand das durchgehende längliche Element, das aus der Öffnung (24) ausgegeben wird, an einer radial äußeren Oberfläche (3) der Formungstrommel aufzunehmen,
- eine Steuervorrichtung (11), die dazu vorgesehen ist, die Formungstrommel (2) zu veranlassen, sich in Übereinstimmung mit der Anwesenheit des durchgehenden länglichen Elements (21) zu drehen, das aus der Öffnung (24) ausgegeben wird, und
- einen Pneumatiksensor (30), der in dem Bereich der Öffnung (24) vorgesehen ist, um die Anwesenheit des durchgehenden länglichen Elements (21) zu erfassen, das aus der Öffnung ausgegeben wird,
- wobei der Sensor auf dem Kopf (23) an der in Bezug auf die Zusatzdüse (29) gegenüberliegenden Seite positioniert ist, so dass er nicht durch den Fluidstrahl beeinträchtigt wird, der von der Zusatzdüse ausgegeben wird, weder in Anwesenheit noch in Abwesenheit des durchgehenden länglichen Elements, das aus der Öffnung (24) ausgegeben wird, und
- wobei der Sensor eine erste Düse (31) umfasst, aus der eine Fluidströmung in einer Strömungsrichtung (A) geblasen wird, und eine zweite Düse (32), die von der Strömungsrichtung beabstandet ist, an eine Druckmesseinheit (33) angeschlossen ist, und zu der die Fluidströmung bei Anwesenheit des durchgehenden länglichen Elements (21), das aus der Öffnung ausgegeben wird, umgeleitet wird, wobei die zweite Düse (32) seitlich in Bezug auf die Öffnung (24) im Wesentlichen in Ausrichtung mit der Längsrichtung (Y) vorgesehen ist.

4. Vorrichtung nach Anspruch 3, wobei die erste Düse vorgesehen ist, um die Fluidströmung in eine Strömungsrichtung (A) zu leiten, die in Bezug auf die Längsrichtung (Y) um einen Winkel (H) zwischen etwa 2° und etwa 30° geneigt ist.

5. Vorrichtung nach Anspruch 3 oder 4, wobei die zweite Düse (32) von der Strömungsrichtung (A) um einen Abstand zwischen etwa 0,4 mm und etwa 3 mm beabstandet ist.

6. Vorrichtung nach Anspruch 3 oder 5, wobei die zweite Düse (32) von der Öffnung (24) um einen Abstand zwischen etwa 2,5 mm und etwa 6,5 mm beabstandet ist.

7. Vorrichtung nach Anspruch 3 oder 6, wobei die erste Düse (31) von der Öffnung (24) um einen Abstand zwischen etwa 1 mm und etwa 2 mm beabstandet ist.

8. Vorrichtung (100) zur Herstellung einer Komponente eines Reifens, wobei die Vorrichtung umfasst:
- einen Extruder (20), der vorgesehen ist, um ein durchgehendes längliches Element (21) durch eine Öffnung (24) zuzuführen, die sich in einer vorherrschenden Längsrichtung (Y) erstreckt und in einem Kopf (23) des Extruders ausgebildet ist,
- eine Zusatzdüse (29), die unter der Öffnung (24) in dem Bereich einer unteren Wand (27) des Kopfes positioniert und vorgesehen ist, um das durchgehende längliche Element (21) mit einem Fluidstrahl anzuheben, der in einer Richtung (Z), die nach oben geneigt ist, von dem Kopf weg gerichtet ist, wenn das durchgehende längliche Element aus der Öffnung ausgegeben wird,
- eine Formungstrommel (2), die in der Lage ist, sich um ihre eigene Drehachse (X) zu drehen, wobei die Formungstrommel dem Extruder zugeordnet ist, um in einem drehenden Zustand das durchgehende längliche Element, das aus der Öffnung (21) ausgegeben wird, an einer radial äußeren Oberfläche (3) der Formungstrommel aufzunehmen,
- eine Steuervorrichtung (11), die dazu vorgesehen ist, die Formungstrommel (2) zu veranlassen, sich in Übereinstimmung mit der Anwesenheit des durchgehenden länglichen Elements (21) zu drehen, das aus der Öffnung (24) ausgegeben wird, und
- einen Pneumatiksensor (130), der in dem Bereich der Öffnung (21) vorgesehen ist, um die Anwesenheit des durchgehenden länglichen Elements (21) zu erfassen, das aus der Öffnung ausgegeben wird,
- wobei der Sensor auf dem Kopf (23) an der in Bezug auf die Zusatzdüse (29) gegenüberliegenden Seite positioniert ist, so dass er nicht durch den Fluidstrahl beeinträchtigt wird, der von der Zusatzdüse ausgegeben wird, weder in Anwesenheit noch in Abwesenheit des durchgehenden länglichen Elements, das aus der Öffnung (24) ausgegeben wird, und
- wobei der Sensor eine erste Düse (131) umfasst, aus der eine Fluidströmung in einer Strömungsrichtung (A) und in eine Strömungsrichtung (B) geblasen wird, die im Wesentlichen senkrecht auf die Längsrichtung (Y) der Öffnung steht, sowie eine zweite Düse (132), die von der Strömungsrichtung beabstandet ist, an eine Druckmesseinheit (33) angeschlossen ist, und zu der die Fluidströmung bei Anwesenheit des durchgehenden länglichen Elements, das aus der Öffnung ausgegeben wird, umgeleitet wird, wobei die erste Düse (131) einen Ausgabequerschnitt aufweist, der die zweite Düse (132) umgibt und die zweite Düse zwischen der Fluidströmung und dem Kopf umschließt.

9. Vorrichtung nach Anspruch 8, wobei die erste Düse (131) einen C-förmigen Ausgabequerschnitt aufweist, der zu einer Stirnwand (25) des Kopfes hin offen ist, wobei die zweite Düse (132) zwischen dem Kopf (23) und der ersten Düse (131) positioniert ist.

10. Vorrichtung nach Anspruch 8 oder 9, wobei die erste Düse (131) und die zweite Düse (132) von der Öffnung (24) um einen Abstand zwischen etwa 2 mm und etwa 4 mm beabstandet sind.

11. Vorrichtung (1; 100) nach einem der Ansprüche 3 bis 10, wobei der Pneumatiksensor (30; 130) gegen den Kopf (23) so angelehnt positioniert ist, dass die erste Düse (31; 131) und die zweite Düse (32; 132) davon um einen Abstand von weniger als etwa 10 mm beabstandet sind.

12. Vorrichtung (1; 100) nach einem der Ansprüche 3 bis 10, wobei die erste Düse (31; 131) und die zweite Düse (32; 132) von dem Kopf (23) um einen Abstand von weniger als etwa 5 mm beabstandet sind.

13. Vorrichtung (1; 100) nach einem der Ansprüche 3 bis 10, wobei die erste Düse (31; 131) und die zweite Düse (32; 132) von dem Kopf (23) um einen Abstand von weniger als etwa 3 mm beabstandet sind.

14. Vorrichtung nach einem der Ansprüche 3 bis 13, wobei an dem Kopf eine Stirnwand (25) definiert ist, an der die Öffnung (24) offen ist, sowie eine obere Wand (26) und eine gegenüberliegende untere Wand (27), wobei der Pneumatiksensor eine erste Bezugsfläche (35) umfasst, die an die obere Wand anschließt, sowie eine zweite Bezugsfläche (36), die an die Stirnwand anschließt.

15. Vorrichtung nach Anspruch 14, wobei der Pneumatiksensor eine dritte Bezugsfläche (37) umfasst, die an eine Seitenwand (28) des Kopfs (23) anschließt, die sich zwischen der oberen Wand und der unteren Wand erstreckt.

## Revendications

1. Processus de construction d'un pneu comprenant le fait :
- de fournir un écoulement de fluide à travers une première buse (31 ; 131) d'un capteur pneumatique (30 ; 130) qui est prévue dans la région d'une tête (23) d'une extrudeuse (20), ledit écoulement de fluide étant dirigé dans une direction d'écoulement (A ; B) qui n'interfère pas avec une deuxième buse (32 ; 132) dudit capteur pneumatique qui est reliée à une unité de mesure de pression (33),
- de fournir à partir d'une buse auxiliaire (29), un jet de fluide dirigé dans une direction vers le haut et loin de ladite tête (23) afin de soulever un élément allongé continu (21) délivré en sortie à partir d'une ouverture (24) qui est formée dans ladite tête (23) de ladite extrudeuse, où ledit capteur est positionné sur ladite tête (23) sur le côté opposé par rapport à ladite buse auxiliaire (29), de manière à ne pas être affecté par ledit jet de fluide qui est évacué de ladite buse auxiliaire, à la fois en présence et en l'absence dudit élément allongé continu délivré en sortie à partir de ladite ouverture (24),
- de commencer à extruder ledit élément allongé continu (21) à travers ladite ouverture (24),
- de rediriger ledit écoulement de fluide par l'intermédiaire dudit élément allongé continu (21) dans ladite deuxième buse (32 ; 132) dudit capteur pneumatique,
- de détecter une variation de pression dans ladite deuxième buse (32 ; 132), déterminant ainsi la présence dudit élément allongé continu (21) délivré en sortie à partir de ladite ouverture,
- d'amener un tambour de formation (2) à tourner autour de son propre axe de rotation (X), après une durée prédéterminée depuis ladite détection de la variation de pression,
- de répartir ledit élément allongé continu (21) sur une surface radialement externe (3) dudit tambour de formation (2).

2. Processus selon la revendication 1, dans lequel ledit tambour de formation (2) est amené à tourner pendant une durée comprise entre environ 0 secondes et environ 7 secondes depuis la détection de ladite variation de pression.

3. Appareil (1) de construction d'un pneu, comprenant :
- une extrudeuse (20) qui est prévue pour fournir un élément allongé continu (21) à travers une ouverture (24) qui s'étend dans une direction longitudinale dominante (Y) et qui est formée dans une tête (23) de ladite extrudeuse,
- une buse auxiliaire (29) positionnée en dessous de ladite ouverture (24) dans la région d'une paroi inférieure (27) de ladite tête et prévue pour soulever ledit élément allongé continu (21) avec un jet de fluide dirigé dans une direction (Z) qui est inclinée vers le haut, loin de ladite tête lorsque ledit élément allongé continu est évacué de ladite ouverture,
- un tambour de formation (2) qui est capable de tourner autour de son propre axe de rotation (X), ledit tambour de formation étant associé à ladite extrudeuse afin de recevoir, dans une condition de rotation, ledit élément allongé continu délivré en sortie à partir de ladite ouverture (24) au niveau d'une surface radialement externe (3) dudit tambour de formation,
- un dispositif de commande (11) qui est prévu pour amener ledit tambour de formation (2) à tourner en fonction de la présence dudit élément allongé continu (21) délivré en sortie à partir de ladite ouverture (24) et
- un capteur pneumatique (30) qui est prévu dans la région de ladite ouverture (24) afin de détecter la présence dudit élément allongé continu (21) délivré en sortie à partir de ladite ouverture,
- ledit capteur étant positionné sur ladite tête (23) sur le côté opposé par rapport à ladite buse auxiliaire (29), de manière à ne pas être affecté par ledit jet de fluide qui est évacué de ladite buse auxiliaire, à la fois en présence et en l'absence dudit élément allongé continu délivré en sortie à partir de ladite ouverture (24), et
- ledit capteur comportant une première buse (31) à partir de laquelle un écoulement de fluide est insufflé dans une direction d'écoulement (A) et une deuxième buse (32) qui est espacée de ladite direction d'écoulement et qui est reliée à une unité de mesure de pression (33) et vers laquelle ledit écoulement de fluide est redirigé en présence dudit élément allongé continu (21) délivré en sortie à partir de ladite ouverture, où ladite deuxième buse (32) est prévue latéralement par rapport à ladite ouverture (24) essentiellement en alignement avec ladite direction longitudinale (Y).

4. Appareil selon la revendication 3, dans lequel ladite première buse est prévue de manière à diriger ledit écoulement de fluide dans une direction d'écoulement (A) qui est inclinée par rapport à ladite direction longitudinale (Y) selon un angle (H) compris entre environ 2° et environ 30°.

5. Appareil selon la revendication 3 ou 4, dans lequel ladite deuxième buse (32) est espacée de ladite direction d'écoulement (A) d'une distance comprise entre environ 0,4 mm et environ 3 mm.

6. Appareil selon l'une quelconque des revendications 3 à 5, dans lequel ladite deuxième buse (32) est espacée de ladite ouverture (24) d'une distance comprise entre environ 2,5 mm et environ 6,5 mm.

7. Appareil selon l'une quelconque des revendications 3 à 6, dans lequel ladite première buse (31) est espacée de ladite ouverture (24) d'une distance comprise entre environ 1 mm et environ 2 mm.

8. Appareil (100) de production d'un composant d'un pneu, comprenant :
- une extrudeuse (20) qui est prévue pour fournir un élément allongé continu (21) à travers une ouverture (24) qui s'étend dans une direction longitudinale dominante (Y) et qui est formée dans une tête (23) de ladite extrudeuse,
- une buse auxiliaire (29) positionnée en dessous de ladite ouverture (24) dans la région d'une paroi inférieure (27) de ladite tête et prévue pour soulever ledit élément allongé continu (21) avec un jet de fluide dirigé dans une direction (Z) qui est inclinée vers le haut, loin de ladite tête lorsque ledit élément allongé continu est évacué de ladite ouverture,
- un tambour de formation (2) qui est capable de tourner autour de son propre axe de rotation (X), ledit tambour de formation étant associé à ladite extrudeuse afin de recevoir, dans une condition de rotation, ledit élément allongé continu (21) délivré en sortie à partir de ladite ouverture au niveau d'une surface radialement externe (3) dudit tambour de formation,
- un dispositif de commande (11) qui est prévu pour amener ledit tambour de formation (2) à tourner en fonction de la présence dudit élément allongé continu délivré en sortie à partir de ladite ouverture et
- un capteur pneumatique (130) qui est prévu dans la région de ladite ouverture afin de détecter la présence dudit élément allongé continu (21) délivré en sortie à partir de ladite ouverture,
- ledit capteur étant positionné sur ladite tête (23) sur le côté opposé par rapport à ladite buse auxiliaire (29), de manière à ne pas être affecté par ledit jet de fluide qui est évacué de ladite buse auxiliaire, à la fois en présence et en l'absence dudit élément allongé continu délivré en sortie à partir de ladite ouverture (24), et
- ledit capteur comportant une première buse (131) à partir de laquelle un écoulement de fluide est insufflé dans une direction d'écoulement (B) qui est essentiellement perpendiculaire à ladite direction longitudinale (Y) de ladite ouverture et une deuxième buse (132) qui est espacée de ladite direction d'écoulement et qui est reliée à une unité de mesure de pression (33) et vers laquelle ledit écoulement de fluide est redirigé en présence dudit élément allongé continu délivré en sortie à partir de ladite ouverture, où ladite première buse (131) a une section transversale d'évacuation de manière à déterminer un écoulement de fluide qui entoure ladite deuxième buse (132), enfermant ladite deuxième buse entre ledit écoulement de fluide et ladite tête.

9. Appareil selon la revendication 8, dans lequel ladite première buse (131) a une section transversale d'évacuation en C qui est ouverte vers une paroi avant (25) de ladite tête, ladite deuxième buse (132) étant positionnée entre ladite tête (23) et ladite première buse (131).

10. Appareil selon l'une des revendications 8 et 9, dans lequel ladite première buse (131) et ladite deuxième buse (132) sont espacées de ladite ouverture (24) d'une distance comprise entre environ 2 mm et environ 4 mm.

11. Appareil (1 ; 100) selon l'une quelconque des revendications 3 à 10, dans lequel ledit capteur pneumatique (30 ; 130) est positionné de manière à s'appuyer contre ladite tête (23) de sorte que ladite première buse (31 ; 131) et ladite deuxième buse (32 ; 132) soient espacées de celle-ci d'une distance inférieure à environ 10 mm.

12. Appareil (1 ; 100) selon l'une quelconque des revendications 3 à 10, dans lequel ladite première buse (31 ; 131) et ladite deuxième buse (32 ; 132) sont espacées de ladite tête (23) d'une distance inférieure à environ 5 mm.

13. Appareil (1 ; 100) selon l'une quelconque des revendications 3 à 10, dans lequel ladite première buse (31 ; 131) et ladite deuxième buse (32 ; 132) sont espacées de ladite tête (23) d'une distance d'environ 3 mm.

14. Appareil selon l'une quelconque des revendications 3 à 13, dans lequel on définit sur ladite tête une paroi avant (25), au niveau de laquelle ladite ouverture (24) est ouverte, et une paroi supérieure (26) et une paroi inférieure opposée (27), ledit capteur pneumatique comprenant une première surface de référence (35) qui est contigüe à ladite paroi supérieure et une deuxième surface de référence (36) qui est contigüe à ladite paroi avant.

15. Appareil selon la revendication 14, dans lequel ledit capteur pneumatique comprend une troisième surface de référence (37) qui est contigüe à une paroi latérale (28) de ladite tête (23) qui s'étend entre ladite paroi supérieure et ladite paroi inférieure.
